(19) Europäisches Patentamt
European Patent Office
Office européen des brevets

(11) **EP 2 988 851 B1**

(12) **EUROPEAN PATENT SPECIFICATION**

(45) Date of publication and mention
of the grant of the patent:
**12.08.2020 Bulletin 2020/33**

(51) Int Cl.:
**B01D 53/94** (2006.01)   **F01N 3/10** (2006.01)
**F01N 3/035** (2006.01)

(21) Application number: **14720211.3**

(86) International application number:
**PCT/GB2014/051257**

(22) Date of filing: **23.04.2014**

(87) International publication number:
**WO 2014/174279 (30.10.2014 Gazette 2014/44)**

(54) **POSITIVE IGNITION ENGINE WITH FILTER SUBSTRATE COMPRISING ZONE-COATED CATALYST WASHCOAT**

FREMDZÜNDUNGSMOTOR MIT FILTERSUBSTRAT MIT EINER BEREICHSWEISEN KATALYSATORBESCHICHTUNG

MOTEUR À ALLUMAGE COMMANDÉ AVEC SUBSTRAT FILTRANT COMPRENANT UNE COUCHE CATALYTIQUE REVÊTANT DES ZONES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.04.2013 GB 201307421**
**24.04.2013 US 201361815443 P**
**24.04.2013 PCT/GB2013/051039**
**18.11.2013 GB 201320342**

(43) Date of publication of application:
**02.03.2016 Bulletin 2016/09**

(73) Proprietor: **Johnson Matthey Public Limited Company**
**London EC4A 4AB (GB)**

(72) Inventors:
• **BLAKEMAN, Philip Gerald**
**Shanghai 200030 (CN)**
• **GREENWELL, David Robert**
**Lower Cambourne**
**Cambridge CB23 6BX (GB)**

(74) Representative: **Nunn, Andrew Dominic**
**Johnson Matthey PLC**
**Gate 20**
**Orchard Road**
**Royston, Hertfordshire SG8 5HE (GB)**

(56) References cited:
| | |
|---|---|
| EP-A1- 2 044 999 | EP-A1- 2 044 999 |
| EP-A1- 2 322 773 | EP-A1- 2 322 773 |
| EP-A1- 2 650 042 | EP-A1- 2 650 042 |
| WO-A1-2009/089156 | WO-A1-2009/158453 |
| WO-A1-2009/158453 | WO-A2-2009/100097 |
| FR-A1- 2 928 176 | GB-A- 2 497 598 |
| GB-A- 2 497 598 | US-A1- 2010 166 629 |
| US-A1- 2010 166 629 | US-A1- 2010 257 843 |
| US-A1- 2010 257 843 | US-A1- 2011 201 493 |
| US-A1- 2011 201 493 | US-A1- 2011 201 493 |
| US-A1- 2011 274 601 | US-A1- 2011 274 601 |
| US-A1- 2013 149 223 | US-A1- 2013 149 223 |

Remarks:
The file contains technical information submitted after the application was filed and not included in this specification

**Description**

The present invention relates to a catalysed filter *inter alia* for filtering particulate matter from exhaust gas emitted from a positive ignition internal combustion engine.

Positive ignition engines cause combustion of a hydrocarbon and air mixture using spark ignition. Contrastingly, compression ignition engines cause combustion of a hydrocarbon by injecting the hydrocarbon into compressed air. Positive ignition engines can be fuelled by gasoline fuel, gasoline fuel blended with oxygenates including methanol and/or ethanol, liquid petroleum gas or compressed natural gas. Positive ignition engines can be stoichiometrically operated engines or lean-burn operated engines.

Ambient PM is divided by most authors into the following categories based on their aerodynamic diameter (the aerodynamic diameter is defined as the diameter of a 1 $g/cm^3$ density sphere of the same settling velocity in air as the measured particle):

    (i) PM-10 - particles of an aerodynamic diameter of less than 10 $\mu$m;
    (ii) Fine particles of diameters below 2.5 $\mu$m (PM-2.5);
    (iii) Ultrafine particles of diameters below 0.1 $\mu$m (or 100 nm); and
    (iv) Nanoparticles, characterised by diameters of less than 50 nm.

Since the mid-1990's, particle size distributions of particulates exhausted from internal combustion engines have received increasing attention due to possible adverse health effects of fine and ultrafine particles. Concentrations of PM-10 particulates in ambient air are regulated by law in the USA. A new, additional ambient air quality standard for PM-2.5 was introduced in the USA in 1997 as a result of health studies that indicated a strong correlation between human mortality and the concentration of fine particles below 2.5 $\mu$m.

Interest has now shifted towards nanoparticles generated by diesel and gasoline engines because they are understood to penetrate more deeply into human lungs than particulates of greater size and consequently they are believed to be more harmful than larger particles, extrapolated from the findings of studies into particulates in the 2.5-10.0 $\mu$m range.

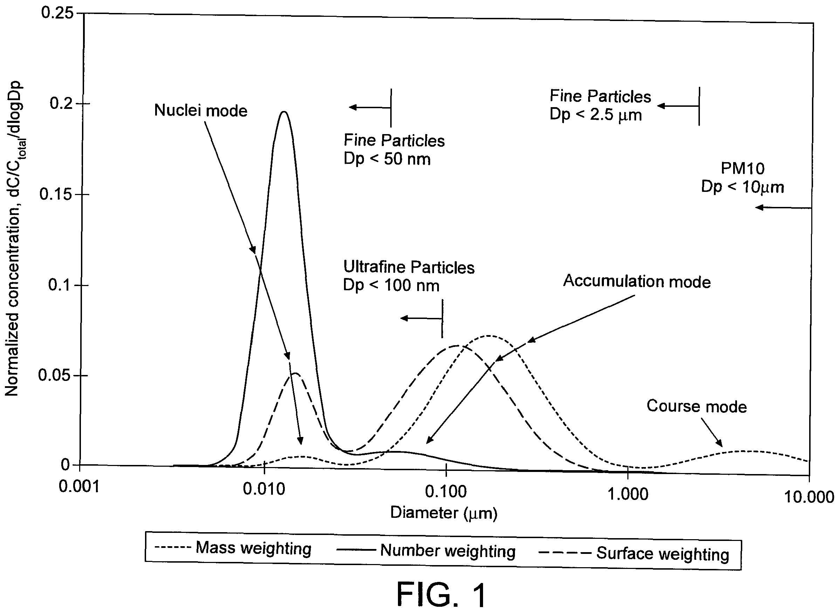

Size distributions of diesel particulates have a well-established bimodal character that correspond to the particle nucleation and agglomeration mechanisms, with the corresponding particle types referred to as the nuclei mode and the accumulation mode respectively (see Figure 1). As can be seen from Figure 1, in the nuclei mode, diesel PM is composed of numerous small particles holding very little mass. Nearly all diesel particulates have sizes of significantly less than 1 $\mu$m, i.e. they comprise a mixture of fine, i.e. falling under the 1997 US law, ultrafine and nanoparticles.

Nuclei mode particles are believed to be composed mostly of volatile condensates (hydrocarbons, sulfuric acid, nitric acid etc.) and contain little solid material, such as ash and carbon. Accumulation mode particles are understood to comprise solids (carbon, metallic ash etc.) intermixed with condensates and adsorbed material (heavy hydrocarbons, sulfur species, nitrogen oxide derivatives etc.) Coarse mode particles are not believed to be generated in the diesel combustion process and may be formed through mechanisms such as deposition and subsequent re-entrainment of particulate material from the walls of an engine cylinder, exhaust system, or the particulate sampling system. The relationship between these modes is shown in Figure 1.

The composition of nucleating particles may change with engine operating conditions, environmental condition (particularly temperature and humidity), dilution and sampling system conditions. Laboratory work and theory have shown that most of the nuclei mode formation and growth occur in the low dilution ratio range. In this range, gas to particle conversion of volatile particle precursors, like heavy hydrocarbons and sulfuric acid, leads to simultaneous nucleation and growth of the nuclei mode and adsorption onto existing particles in the accumulation mode. Laboratory tests (see e.g. SAE 980525 and SAE 2001-01-0201) have shown that nuclei mode formation increases strongly with decreasing air dilution temperature but there is conflicting evidence on whether humidity has an influence.

Generally, low temperature, low dilution ratios, high humidity and long residence times favour nanoparticles formation and growth. Studies have shown that nanoparticles consist mainly of volatile material like heavy hydrocarbons and sulfuric acid with evidence of solid fraction only at very high loads.

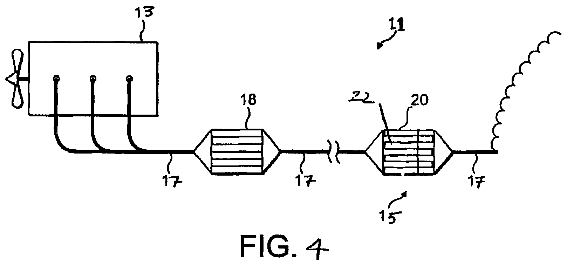

Contrastingly, engine-out size distributions of gasoline particulates in steady state operation show a unimodal distribution with a peak of about 60-80nm (see e.g. Figure 4 in SAE 1999-01-3530). By comparison with diesel size distribution, gasoline PM is predominantly ultrafine with negligible accumulation and coarse mode.

Particulate collection of diesel particulates in a diesel particulate filter is based on the principle of separating gas-borne particulates from the gas phase using a porous barrier. Diesel filters can be defined as deep-bed filters and/or surface-type filters. In deep-bed filters, the mean pore size of filter media is bigger than the mean diameter of collected particles. The particles are deposited on the media through a combination of depth filtration mechanisms, including diffusional deposition (Brownian motion), inertial deposition (impaction) and flow-line interception (Brownian motion or inertia).

In surface-type filters, the pore diameter of the filter media is less than the diameter of the PM, so PM is separated by sieving. Separation is done by a build-up of collected diesel PM itself, which build-up is commonly referred to as "filtration cake" and the process as "cake filtration".

It is understood that diesel particulate filters, such as ceramic wallflow monoliths, may work through a combination of depth and surface filtration: a filtration cake develops at higher soot loads when the depth filtration capacity is saturated and a particulate layer starts covering the filtration surface. Depth filtration is characterized by somewhat lower filtration efficiency and lower pressure drop than the cake filtration.

Other techniques suggested in the art for separating gasoline PM from the gas phase include vortex recovery.

Emission legislation in Europe from 1st September 2014 (Euro 6) requires control of the number of particles emitted from both diesel and gasoline (positive ignition) passenger cars. For gasoline EU light duty vehicles the allowable limits are: 1000mg/km carbon monoxide; 60mg/km nitrogen oxides ($NO_x$); 100mg/km total hydrocarbons (of which $\leq$ 68mg/km are non-methane hydrocarbons); and 4.5mg/km particulate matter ((PM) for direct injection engines only). The Euro 6 PM standard will be phased in over a number of years with the standard from the beginning of 2014 being set at $6.0 \times 10^{12}$ per km (Euro 6) and the standard set from the beginning of 2017 being $6.0 \times 10^{11}$ per km (Euro 6+). In a practical sense, the range of particulates that are legislated for are between 23 nm and 3 $\mu$m.

In the United States, on 22nd March 2012, the State of California Air Resources Board (CARB) adopted new Exhaust Standards from 2017 and subsequent model year "LEV III" passenger cars, light-duty trucks and medium-duty vehicles which include a 3mg/mile emission limit, with a later introduction of 1mg/mi possible, as long as various interim reviews deem it feasible.

The new Euro 6 (Euro 6 and Euro 6+) emission standard presents a number of challenging design problems for meeting gasoline emission standards. In particular, how to design a filter, or an exhaust system including a filter, for reducing the number of PM gasoline (positive ignition) emissions, yet at the same time meeting the emission standards for non-PM pollutants such as one or more of oxides of nitrogen ($NO_x$), carbon monoxide (CO) and unburned hydrocarbons (HC), all at an acceptable back pressure, e.g. as measured by maximum on-cycle backpressure on the EU drive cycle.

TWCs are intended to catalyse three simultaneous reactions: (i) oxidation of carbon monoxide to carbon dioxide, (ii) oxidation of unburned hydrocarbons to carbon dioxide and water; and (iii) reduction of nitrogen oxides to nitrogen and oxygen. These three reactions occur most efficiently when the TWC receives exhaust gas from an engine running at or about the stoichiometric point. As is well known in the art, the quantity of carbon monoxide (CO), unburned hydrocarbons (HC) and nitrogen oxides ($NO_x$) emitted when gasoline fuel is combusted in a positive ignition (e.g. spark-ignited) internal combustion engine is influenced predominantly by the air-to-fuel ratio in the combustion cylinder. An exhaust gas having a stoichiometrically balanced composition is one in which the concentrations of oxidising gases ($NO_x$ and $O_2$) and reducing gases (HC and CO) are substantially matched. The air-to-fuel ratio that produces this stoichiometrically balanced exhaust gas composition is typically given as 14.7:1.

A three-way catalyst (TWC) typically contains one or more platinum group metals, particularly those selected from the group consisting of platinum, palladium and rhodium.

Theoretically, it should be possible to achieve complete conversion of $O_2$, $NO_x$, CO and HC in a stoichiometrically balanced exhaust gas composition to $CO_2$, $H_2O$ and $N_2$ (and residual $O_2$) and this is the duty of the TWC. Ideally, therefore, the engine should be operated in such a way that the air-to-fuel ratio of the combustion mixture produces the stoichiometrically balanced exhaust gas composition.

A way of defining the compositional balance between oxidising gases and reducing gases of the exhaust gas is the lambda ($\lambda$) value of the exhaust gas, which can be defined according to equation (1) as:

$$\text{Actual engine air-to-fuel ratio/Stoichiometric engine air-to-fuel ratio,} \qquad (1)$$

wherein a lambda value of 1 represents a stoichiometrically balanced (or stoichiometric) exhaust gas composition, wherein a lambda value of >1 represents an excess of $O_2$ and $NO_x$ and the composition is described as "lean" and wherein a lambda value of <1 represents an excess of HC and CO and the composition is described as "rich". It is also common in the art to refer to the air-to-fuel ratio at which the engine operates as "stoichiometric", "lean" or "rich", depending on the exhaust gas composition which the air-to-fuel ratio generates: hence stoichiometrically-operated gasoline engine or lean-burn gasoline engine.

It should be appreciated that the reduction of $NO_x$ to $N_2$ using a TWC is less efficient when the exhaust gas composition is lean of stoichiometric. Equally, the TWC is less able to oxidise CO and HC when the exhaust gas composition is rich. The challenge, therefore, is to maintain the composition of the exhaust gas flowing into the TWC at as close to the stoichiometric composition as possible.

Of course, when the engine is in steady state it is relatively easy to ensure that the air-to-fuel ratio is stoichiometric. However, when the engine is used to propel a vehicle, the quantity of fuel required changes transiently depending upon the load demand placed on the engine by the driver. This makes controlling the air-to-fuel ratio so that a stoichiometric exhaust gas is generated for three-way conversion particularly difficult. In practice, the air-to-fuel ratio is controlled by an engine control unit, which receives information about the exhaust gas composition from an exhaust gas oxygen (EGO) (or lambda) sensor: a so-called closed loop feedback system. A feature of such a system is that the air-to-fuel ratio oscillates (or perturbates) between slightly rich of the stoichiometric (or control set) point and slightly lean, because there is a time lag associated with adjusting air-to-fuel ratio. This perturbation is characterised by the amplitude of the air-to-fuel ratio and the response frequency (Hz).

When the exhaust gas composition is slightly rich of the set point, there is a need for a small amount of oxygen to consume the unreacted CO and HC, i.e. to make the reaction more stoichiometric. Conversely, when the exhaust gas goes slightly lean, the excess oxygen needs to be consumed. This was achieved by the development of the oxygen storage component that liberates or absorbs oxygen during the perturbations. The most commonly used oxygen storage component (OSC) in modern TWCs is cerium oxide ($CeO_2$) or a mixed oxide containing cerium, e.g. a Ce/Zr mixed oxide.

The active components in a typical TWC comprise one or both of platinum and palladium in combination with rhodium, or even palladium only (no rhodium), supported on a high surface area oxide, and an oxygen storage component.

US patent publication no. 2013/0149223 A1 discloses an exhaust system for an internal combustion engine comprises a) a first catalysed substrate monolith comprising a first washcoat coating disposed in a first washcoat zone of the substrate monolith and a second washcoat coating disposed in a second washcoat zone of the substrate monolith, wherein the first washcoat coating comprises a catalyst composition comprising at least one platinum group metal (PGM) and at least one support material, wherein at least one PGM in the first washcoat coating is liable to volatilise when the first washcoat coating is exposed to relatively extreme conditions including relatively high temperatures, wherein the second washcoat coating comprises at least one material supporting copper for trapping volatilised PGM and wherein the second washcoat coating is oriented to contact exhaust gas that has contacted the first washcoat; and b) a second catalysed substrate monolith 14 comprising a catalyst for selectively catalysing the reduction of oxides of nitrogen to dinitrogen with a nitrogenous reductant disposed downstream from the first catalysed substrate monolith.

GB2497598A discloses a catalysed substrate monolith comprises an oxidising catalyst on a substrate monolith in an exhaust system for use in treating exhaust gas emitted from a lean-bum internal combustion engine, which catalysed substrate monolith comprising a first washcoat coating having a length L and a second washcoat coating, wherein the second washcoat coating is disposed in a layer above the first washcoat coating for at least some of length L, wherein the first washcoat coating comprises a catalyst composition comprising platinum and at least one support material for the platinum, wherein the second washcoat coating comprises a catalyst composition comprising both platinum and palladium and at least one support material for the platinum and the palladium and wherein a weight ratio of platinum to palladium (Pt:Pd) in the second washcoat coating is less than or equal to two. The flow-through substrate monolith is designed to promote the oxidation of hydrocarbons, carbon monoxide and nitrogen oxide.

EP2322773A1 discloses a method for cleaning combustion engine exhaust gases involving conducting exhaust gas to be cleaned with a discontinuous profile of the air ratio across a wall-flow filter substrate including an inlet duct and an outlet duct. The substrate comprises a catalytically active coating containing a storage material that extends from an inlet end towards an outlet end so as to correspond to two-thirds of the substrate length. A set of exhaust-gas components is bound in the storage material under certain operating conditions and is released from the storage material when the operating conditions changes.

EP 2044999A1 discloses a particulate filter, which is adapted to be disposed in an exhaust passage of an engine to trap particulate matter contained in exhaust gas discharged from the engine. The particulate filter comprises a filter body having a porous partition wall which defines a plurality of exhaust gas channels allowing the exhaust gas to pass therethrough, and a catalyst layer formed on a surface of the porous partition wall. The catalyst layer includes a Zr-based composite oxide which contains zirconium (Zr), and a rare-earth metal except cerium, wherein a content ratio of an oxide of the non-cerium rare-earth metal to a total amount of $ZrO_2$ and the oxide of the non-cerium rare-earth metal in the Zr-based composite oxide is set in the range of greater than 33 mol% to less than 40 mol%.

It is envisaged that a minimum of particle reduction for a three-way catalysed particulate filter to meet the Euro 6 PM number standard relative to an equivalent flowthrough catalyst is ≥50%. Additionally, while some backpressure increase for a three-way catalysed wallflow filter relative to an equivalent flowthrough catalyst is inevitable, in our experience peak backpressure over the MVEG-B drive cycle (average over three tests from "fresh") for a majority of passenger vehicles should be limited to <20 KPa (<200 mbar), such as <18 KPa (<180 mbar), <15 KPa (<150 mbar) and preferably <12 KPa (<120 mbar) e.g. 10 KPa (<100 mbar).

There have been a number of recent efforts to combine TWCs with filters for meeting the Euro 6 emission standards, including US 2009/0193796 discloses an emission treatment system downstream of a gasoline direct injection engine for treatment of an exhaust gas comprising hydrocarbons, carbon monoxide, nitrogen oxides and particulates, the emission treatment system optionally comprising a particulate trap zone-coated with an oxidation catalyst comprising platinum group metal consisting of platinum and palladium.

The new emission standards will force the use of filters for filtering particulate matter from exhaust gas emitted from positive ignition internal combustion engines. However, because the size of such particulate matter is much finer than particulate matter emitted from diesel engines, the design challenge is to filter particulate matter from positive ignition exhaust gas but at acceptable back pressure.

We have now discovered a way of catalysing a filter for use in the exhaust system of a vehicular positive ignition engine, thereby reducing the total volume of exhaust system components compared with separate filter and catalyst substrate components - which is important particularly on passenger vehicles where space can be restricted - but which has lower back pressure relative to a homogeneously coated catalysed filter, i.e. having coatings applied via inlet and outlet ends both at the same washcoat loading.

According to one aspect, the invention provides a positive ignition engine comprising an exhaust system comprising a catalysed filter for filtering particulate matter from exhaust gas emitted from a positive ignition internal combustion engine, which filter comprising a ceramic porous wall-flow filter substrate having a total substrate length and having inlet channels defined in part by ceramic inlet wall surfaces and outlet channels defined in part by ceramic outlet wall surfaces, wherein the inlet surfaces are separated from the outlet surfaces by a first porous structure containing pores of a first mean pore size, wherein the porous substrate is coated in part with a catalyst washcoat composition, wherein a second porous structure of a washcoated part of the porous substrate contains pores of a second mean pore size, wherein the second mean pore size is less than the first mean pore size, which catalyst washcoat composition being disposed in a first zone comprising the inlet surfaces of a first substrate length less than the total substrate length, wherein a second zone comprising the outlet surfaces of a second substrate length contains no washcoat and wherein the sum of the substrate length in the first zone and the substrate length in the second zone is >100%, wherein the substrate zone length in the first zone is 25 to 75% of the total substrate length, wherein the first zone is disposed upstream from the second zone, and wherein the second substrate length is 100% of the total substrate length..

According to the first aspect of the invention, the second zone having a second substrate length comprises the outlet surfaces containing no washcoat. As the second zone contains no washcoat, it follows that the length of "unwashcoated" second zone will always be substantially the same as the total substrate length (taking into account any end plugs present at one end of the outlet channels of the wall-flow filter). Since the inlet surfaces comprise a first zone having a first substrate length less than the total substrate length, the sum of the substrate length in the first zone and the substrate length in the second zone will be >100%.

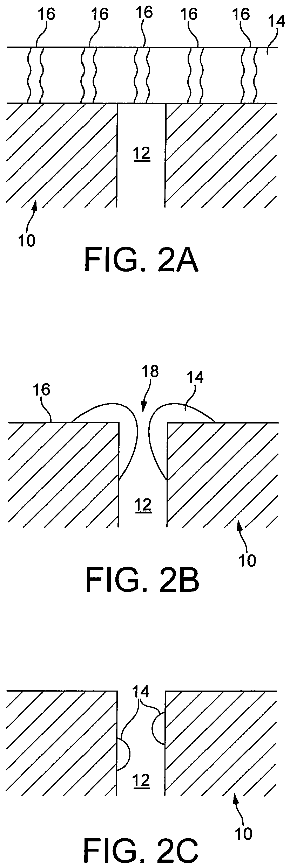

It will be understood that, in embodiments, the second porous structure is comprised of the first porous structure, e.g. in embodiments shown in Figures 2B and 2C, wherein at least part of the washcoat particles is in the porous structure.

Mean pore size can be determined by mercury porosimetry.

In embodiments the catalyst washcoat composition is a three-way catalyst washcoat composition, an oxidation catalyst washcoat composition, a $NO_x$ absorber catalyst washcoat composition or a selective catalytic reduction (SCR) catalyst washcoat composition, but is preferably a three-way catalyst washcoat composition. Preferably, however, the catalyst washcoat composition is the three-way catalyst washcoat composition.

A TWC washcoat composition for use in the first aspect of the present invention comprises one or both of platinum and palladium in combination with rhodium, or in embodiments palladium only (no platinum or rhodium) or rhodium only (no platinum or palladium) supported on a high surface area oxide, e.g. gamma alumina, and an oxygen storage component, e.g. comprising a mixed oxide comprising cerium.

The oxidation catalyst washcoat composition may contain base metal catalytic agents, platinum group metal catalytic agents or combinations of both that are supported on refractory metal oxides, e.g., activated alumina. Base metal catalytic agents may include rare earth metal oxides, particularly lanthanum oxide, cerium oxide and praseodymium oxide. Specific platinum group metal catalytic agents may include platinum, palladium, rhodium and combinations thereof. Useful refractory metal oxides may include silica, alumina, gamma-alumina, titania, zirconia, silica-alumina and ceria-zirconia. Optionally, the catalytic washcoat composition also may contain other additives such as promoters and stabilizers. Molecular sieves such as zeolites may also be useful in the oxidation catalyst.

$NO_x$ absorber catalysts (NACs) are known e.g. from US patent no. 5,473,887 and are designed to adsorb nitrogen oxides ($NO_x$) from lean exhaust gas (lambda >1) and to desorb the $NO_x$ when the oxygen concentration in the exhaust gas is decreased. Desorbed $NO_x$ may be reduced to $N_2$ with a suitable reductant, e.g. gasoline fuel, promoted by a catalyst component, such as rhodium, of the NAC itself or located downstream of the NAC. In practice, control of oxygen concentration can be adjusted to a desired redox composition intermittently in response to a calculated remaining $NO_x$ adsorption capacity of the NAC, e.g. richer than normal engine running operation (but still lean of stoichiometric or lambda = 1 composition), stoichiometric or rich of stoichiometric (lambda <1). The oxygen concentration can be adjusted by a number of means, e.g. throttling, injection of additional hydrocarbon fuel into an engine cylinder such as during the exhaust stroke or injecting hydrocarbon fuel directly into exhaust gas downstream of an engine manifold.

A typical NAC formulation includes a catalytic oxidation component, such as platinum, a significant quantity, i.e. substantially more than is required for use as a promoter such as a promoter in a TWC, of a $NO_x$-storage component, such as barium or ceria ($CeO_2$), and a reduction catalyst, e.g. rhodium. One mechanism commonly given for $NO_x$-storage from a lean exhaust gas for this formulation is:

$$NO + \tfrac{1}{2} O_2 \rightarrow NO_2 \qquad (2);$$

and

$$BaO + NO_2 + \tfrac{1}{2} O_2 \rightarrow Ba(NO_3)_2 \qquad (3),$$

wherein in reaction (2), the nitric oxide reacts with oxygen on active oxidation sites on the platinum to form $NO_2$. Reaction (3) involves adsorption of the $NO_2$ by the storage material in the form of an inorganic nitrate.

At lower oxygen concentrations and/or at elevated temperatures, the nitrate species become thermodynamically unstable and decompose, producing NO or $NO_2$ according to reaction (4) below. In the presence of a suitable reductant, these nitrogen oxides are subsequently reduced by carbon monoxide, hydrogen and hydrocarbons to $N_2$, which can take place over the reduction catalyst (see reaction (5)).

$$Ba(NO_3)_2 \rightarrow BaO + 2NO + \tfrac{3}{2} O_2 \text{ or } Ba(NO_3)_2 \rightarrow BaO + 2NO_2 + \tfrac{1}{2} O_2 \qquad (4);$$

and

$$NO + CO \rightarrow \tfrac{1}{2} N_2 + CO_2 \qquad (5);$$

(Other reactions include $Ba(NO_3)_2 + 8H_2 \rightarrow BaO + 2NH_3 + 5H_2O$ followed by $NH_3 + NO_x \rightarrow N_2 + yH_2O$ or $2NH_3 + 2O_2 + CO \rightarrow N_2 + 3H_2O + CO_2$ etc.).

In the reactions of (2)-(5) above, the reactive barium species is given as the oxide. However, it is understood that in the presence of air most of the barium is in the form of the carbonate or possibly the hydroxide. The skilled person can adapt the above reaction schemes accordingly for species of barium other than the oxide and sequence of catalytic coatings in the exhaust stream and any other alkaline earth metals, alkali metals or lanthanides included for $NO_x$ absorption.

Modern $NO_x$ absorber catalysts coated on honeycomb flowthrough monolith substrates are typically arranged in layered arrangements. However, multiple layers applied on a filter substrate can create backpressure problems. It is highly preferable, therefore, if the $NO_x$ absorber catalyst for use in the present invention is a "single layer" $NO_x$ absorber catalyst. Particularly preferred "single layer" $NO_x$ absorber catalysts comprise a first component of rhodium supported on a ceria-zirconia mixed oxide or an optionally stabilised alumina (e.g. stabilised with silica or lanthana or another rare earth element) in combination with second components which support platinum and/or palladium. The second components comprise platinum and/or palladium supported on an alumina-based high surface area support and a particulate "bulk" ceria ($CeO_2$) component or mixed oxide comprising ceria, i.e. not a soluble ceria supported on a particulate support, but "bulk" ceria capable of supporting the Pt and/or Pd as such. The particulate ceria (or mixed oxide comprising ceria) comprises a $NO_x$ absorber component and supports an alkaline earth metal and/or an alkali metal, preferably barium, in addition to the platinum and/or palladium. The alumina-based high surface area support can be magnesium aluminate e.g. $MgAl_2O_4$, for example.

The preferred "single layer" NAC composition comprises a mixture of the rhodium and platinum and/or palladium support components. These components can be prepared separately, i.e. pre-formed prior to combining them in a mixture, or rhodium, platinum and palladium salts and the supports and other components can be combined and the rhodium, platinum and palladium components hydrolysed preferentially to deposit onto the desired support.

SCR catalysts for use in the present invention promote the reactions selectively $4NH_3 + 4NO + O_2 \rightarrow 4N_2 + 6H_2O$ (i.e. 1:1 $NH_3$:NO); $4NH_3 + 2NO + 2NO_2 \rightarrow 4N_2 + 6H_2O$ (i.e. 1:1 $NH_3$:$NO_x$; and $8NH_3 + 6NO_2 \rightarrow 7N_2 + 12H_2O$ (i.e. 4:3 $NH_3$:$NO_x$) in preference to undesirable, non-selective side-reactions such as $2NH_3 + 2NO_2 \rightarrow N_2O + 3H_2O + N_2$ and can be selected from the group consisting of at least one of Cu, Hf, La, Au, In, V, lanthanides and Group VIII transition metals, such as Fe, supported on a refractory oxide or molecular sieve. Particularly preferred metals are Ce, Fe and Cu and combinations of any two or more thereof. Suitable refractory oxides include $Al_2O_3$, $TiO_2$, $CeO_2$, $SiO_2$, $ZrO_2$ and mixed oxides containing two or more thereof. The non-zeolite catalyst can also include tungsten oxide, e.g. $V_2O_5$/$WO_3$/$TiO_2$, $WO_x$/$CeZrO_2$, $WO_x$/$ZrO_2$ or $Fe$/$WO_x$/$ZrO_2$.

In particularly preferred embodiments, an SCR catalyst washcoat comprises at least one molecular sieve, such as an aluminosilicate zeolite or a SAPO. The at least one molecular sieve can be a small, a medium or a large pore molecular sieve, for example. By "small pore molecular sieve" herein we mean molecular sieves containing a maximum ring size of 8, such as CHA; by "medium pore molecular sieve" herein we mean a molecular sieve containing a maximum ring size of 10, such as ZSM-5; and by "large pore molecular sieve" herein we mean a molecular sieve having a maximum ring size of 12, such as beta. Small pore molecular sieves are potentially advantageous for use in SCR catalysts - see for example WO 2008/132452.

Preferred molecular sieves with application as SCR catalysts in the present invention are synthetic aluminosilicate zeolite molecular sieves selected from the group consisting of AEI, ZSM-5, ZSM-20, ERI including ZSM-34, mordenite, ferrierite, BEA including Beta, Y, CHA, LEV including Nu-3, MCM-22 and EU-1, preferably AEI or CHA, and having a silica-to-alumina ratio of about 10 to about 50, such as about 15 to about 40.

It is a particular feature of the present invention that the first zone intended for orientation in an exhaust system to an upstream side can be higher than the previously regarded highest washcoat loadings, e.g. those disclosed in the Examples in WO 2010/097634, whereas the second zone contains no washcoat. In the accompanying Example, the resulting three-way catalysed filter has a lower backpressure than a homogeneously zone-coated filter at the same platinum group metal loading. In a particular embodiment, the washcoat loading in the first zone is >97.6 g/L (>1.60 g in$^{-3}$) such as 122.0 g/L (>2.00 g in$^{-3}$) or for example 97.6 to 146.5 g/L (1.6 to 2.4 g in$^{-3}$), and in preferred embodiments the washcoat loading in the first zone is >146.5 g/L (>2.4 g in$^{-3}$). Preferably, however, the washcoat loading in the first zone is ≤183.1 g/L (≤ 3.0 g/in$^{-3}$).

In the invention, because the outlet surfaces contain no washcoat, the second substrate length is always 100%. According to the invention, the first zone length (i.e. first substrate length less than the total substrate length) is 25-75% of the total substrate length, e.g. 50%. However, in a preferred embodiment, the substrate length in the first zone <50% of the total substrate length. The preferred embodiment is desirable in the embodiment comprising the NO$_x$ absorber catalyst washcoat composition, the embodiment comprising the oxidation catalyst washcoat composition or the preferred embodiment comprising the three-way catalyst washcoat composition when used in an exhaust system wherein the exhaust system comprises a flow through monolith substrate comprising a three-way catalyst composition upstream of the catalysed filter. This is because the filter has a lower backpressure, but the system as a whole contains sufficient platinum group metal to meet emissions standards e.g. for reduction in CO, HC and NO$_x$.

In embodiments, the substrate length in the first zone is <45% such as <40%, e.g. <35% of the total substrate length.

However, in embodiments wherein the catalyst washcoat composition is a SCR catalyst washcoat composition, longer first zone lengths may be preferred, e.g. >50%, to achieve a desired overall level of NO$_x$ conversion in the system. For the avoidance of doubt, however, it will be understood that the limitations in the preceding paragraph, i.e. "In embodiments, the substrate length in the first zone is <45% etc." can apply equally to the filters according to the first aspect of the invention comprising a SCR catalyst washcoat composition.

In embodiments comprising precious metals, specifically platinum group metals, such as in embodiments wherein the catalyst washcoat composition is a three-way catalyst, a NO$_x$ absorber catalyst or an oxidation catalyst, the total precious metal loading in the first zone can be >1.77 g/L (>50gft$^{-3}$), but is preferably between 2.12 to 8.83 g/L (60-250gft$^{-3}$), and is typically from 2.47-5.30 g/L (70-150gft$^{-3}$).

In preferred embodiments, the first zone comprises a surface washcoat, wherein a washcoat layer substantially covers surface pores of the porous structure and the pores of the washcoated porous substrate are defined in part by spaces between the particles (interparticle pores) in the washcoat. In this preferred embodiment, a mean interparticle pore size of the porous washcoat is 5.0nm to 5.0μm, such as 0.1-1.0μm. Methods of making surface coated porous filter substrates include introducing a polymer, e.g. poly vinyl alcohol (PVA), into the porous structure, applying a washcoat to the porous filter substrate including the polymer and drying, then calcining the coated substrate to burn out the polymer. A schematic representation of the first embodiment is shown in Figure 2A.

A D90 of solid washcoat particles in this first, surface coating embodiment can be in the range 0.1 to 20μm, or 10 to 40μm, such as 15 to 30μm or 12 to 25μm or >15μm such as from 18 to 40μm, e.g. 20 to 35μm or 25 to 30μm. "D90" as used herein defines the particle size distribution in a washcoat wherein 90% of the particles present have a diameter within the range specified. In embodiments, the corresponding mean particle size (D50) of the solid washcoat particles is in the range 1 to 40μm e.g., 1 to 20 μm, such as between 4 and 15μm, such as 5 to 12μm or 7 to 10μm. In certain embodiments, the D50 particle size is 5μm and the corresponding D90 is about 15μm. In another embodiment, where the D50 particle size is 7-10μm, e.g. 7-8μm, the D90 particle size is about 20μm. It will be understood that the broader the range of particle sizes in the washcoat, the more likely that washcoat may enter the porous structure of the porous substrate.

In TWC embodiments, the oxygen storage components may have a different particle size from the high surface area oxide. So, an OSC may have a D50 between 1-10μm, such as from 4 to 6μm; and a high surface area oxide may have a D50 of between 1-10μm, such as from 4 to 6μm.

In further TWC embodiments, the D90 of solid washcoat particles is in the range of from 0.1 to 20μm. Again, the D90 of the OSC may be different from that of the high surface area oxide. So, the D90 of the OSC can be <18μm and the D90 of the high surface area oxide can be <20μm.

D50 and D90 measurements disclosed herein were obtained by Laser Diffraction Particle Size Analysis using a Malvern Mastersizer 2000, which is a volume-based technique (i.e. D50 and D90 may also be referred to as Dv50 and Dv90 (or D(v,0.50) and D(v,0.90)) and applies a mathematical Mie theory model to determine a particle size distribution. Diluted washcoat samples were prepared by sonication in distilled water without surfactant for 30 seconds at 35 watts.

Methods of coating porous filter substrates are known to the skilled person and include, without limitation, the method disclosed in WO 99/47260, i.e. a method of coating a monolithic support, comprising the steps of (a) locating a containment means on top of a support, (b) dosing a pre-determined quantity of a liquid component into said containment means, either in the order (a) then (b) or (b) then (a), and (c) by applying pressure or vacuum, drawing said liquid component into at least a portion of the support, and retaining substantially all of said quantity within the support. Such process steps can be repeated from another end of the monolithic support following drying of the first coating with optional firing/calcination.

Alternatively, the method disclosed in WO 2011/080525 can be used, i.e. comprising the steps of: (i) holding a honeycomb monolith substrate substantially vertically; (ii) introducing a pre-determined volume of the liquid into the substrate via open ends of the channels at a lower end of the substrate; (iii) sealingly retaining the introduced liquid within the substrate; (iv) inverting the substrate containing the retained liquid; and (v) applying a vacuum to open ends of the channels of the substrate at the inverted, lower end of the substrate to draw the liquid along the channels of the substrate.

According to a second embodiment, the washcoat can be coated on inlet surfaces and also within the porous structure of the porous substrate. We believe that a surface coating around a pore opening at the inlet and/or outlet surfaces, thereby narrowing the e.g. surface pore size of a bare filter substrate, promotes interaction of the gas phase including PM without substantially restricting the pore volume, so not giving rise to significant increases in back pressure. That is, the pores at a surface of the porous structure comprise a pore opening and the washcoat causes a narrowing of substantially all the pore openings. A schematic representation of the second embodiment is shown in Figure 2B.

Methods of making a filter according to the second embodiment can involve appropriate formulation of the washcoat known to the person skilled in the art including adjusting viscosity and surface wetting characteristics and application of an appropriate vacuum following coating of the porous substrate (see also WO 99/47260).

In the first and second embodiments, the inlet surfaces can include a plurality of washcoat layers, e.g. a $NO_x$ absorber catalyst or TWC composition, wherein each washcoat layer within the plurality of layers can be the same or different, e.g. the mean pore size in a first layer can be different from that of a second layer.

According to a third embodiment, the washcoat sits substantially within, i.e. permeates, the porous structure of the porous substrate. A schematic representation of this third embodiment is shown in Figure 2C. Methods of making a filter according to the third embodiment include the appropriate formulation of the washcoat known to the person skilled in the art including viscosity adjustment, selection of low wetting characteristics and application of an appropriate vacuum following washcoating of the porous substrate (see also WO 99/47260). Alternatively, the porous substrate can be soaked in an appropriate solution of salts and the resulting product dried and calcined.

EP 1663458 discloses a SCR filter, wherein the filter is a wallflow monolith and wherein an SCR catalyst composition permeates walls of the wallflow monolith. The specification discloses generally that the walls of the wallflow filter can contain thereon or therein (i.e. not both) one or more catalytic materials. According to the disclosure, "permeate", when used to describe the dispersion of a catalyst slurry on the wallflow monolith substrate, means the catalyst composition is dispersed throughout the wall of the substrate.

In the second and third embodiments, wherein at least part of the washcoat is in the porous structure, a size, e.g. a mean size, of the solid washcoat particles can be less than the mean pore size of the porous filter substrate for example in the range 0.1 to 20μm, such as 1 to 18μm, 1 to 16μm, 2 to 15μm or 3 to 12μm. In particular embodiments, the abovementioned size of the solid washcoat particles is a D90 instead of a mean size. In preferred embodiments, the at least one in-wall inlet coating composition has a mean particle size (D50) of 1 to 3μm. In such embodiments, the at least one in-wall inlet coating composition can have a D90 particle size of 4 to 6μm.

According to the invention, the filter is a wallflow filter comprising a ceramic porous filter substrate having a plurality of inlet channels and a plurality of outlet channels, wherein each inlet channel and each outlet channel is defined in part by a ceramic wall of porous structure, wherein each inlet channel is separated from an outlet channel by a ceramic wall of porous structure. This filter arrangement is also disclosed in SAE 810114, and reference can be made to this document for further details.

The cell density of diesel wallflow filters in practical use can be different from wallflow filters for use in the present invention in that the cell density of diesel wallflow filters is generally 46.5 cells per $cm^2$ (300 cells per square inch (cpsi)) or less, e.g. 15.5 to 31.0 cells per $cm^2$ (100 or 200 cpsi), so that the relatively larger diesel PM components can enter inlet channels of the filter without becoming impacted on the solid frontal area of the diesel particulate filter, thereby caking and fouling access to the open channels, whereas wallflow filters for use in the present invention can be up to 46.5 cells per $cm^2$ (300 cpsi) or greater, such as 54.3 cells per $cm^2$ (350 cpsi), 62.0 cells per $cm^2$ (400 cpsi), 93.0 cells per $cm^2$ (600 cpsi), 139.5 cells per $cm^2$ (900 cpsi) or even 186.0 cells per $cm^2$ (1200 cpsi).

An advantage of using higher cell densities is that the filter can have a reduced cross-section, e.g. diameter, than diesel particulate filters, which is a useful practical advantage that increases design options for locating exhaust systems on a vehicle.

It will be understood that the benefit of filters for use in the invention is substantially independent of the porosity of the uncoated porous substrate. Porosity is a measure of the percentage of void space in a porous substrate and is related to backpressure in an exhaust system: generally, the lower the porosity, the higher the backpressure. However, the porosity of filters for use in the present invention are typically >40% or >50% and porosities of 45-75% such as 50-65% or 55-60% can be used with advantage. The mean pore size of the washcoated porous substrate is important for filtration. So, it is possible to have a porous substrate of relatively high porosity that is a poor filter because the mean pore size is also relatively high.

In embodiments, the first mean pore size e.g. of surface pores of the porous structure of the porous filter substrate is from 8 to 45$\mu$m, for example preferably 8 to 25$\mu$m, 10 to 20$\mu$m or 10 to 15$\mu$m. In preferred embodiments, the first mean pore size is >18$\mu$m such as from 15 to 45$\mu$m, 20 to 45$\mu$m e.g. 20 to 30$\mu$m, or 25 to 45$\mu$m.

In a particularly preferred embodiment according to the invention, the exhaust system comprises a flow through monolith substrate comprising a three-way catalyst composition or a $NO_x$ absorber catalyst composition disposed upstream of the catalysed filter. This is a particularly preferred arrangement for embodiments of the first aspect of the invention wherein the catalyst washcoat composition is a three-way catalyst washcoat composition, because the filter of the first aspect according to the invention produces less back-pressure in the system but $NO_x$ conversion in the system overall is maintained because the three way catalyst volume is made up of the upstream flow through monolith substrate coating and the coating in the first zone of the filter according to the first aspect of the invention.

Exhaust systems comprising SCR catalyst require nitrogenous reductant to promote the $NO_x$ reduction reaction, i.e. to be effective, nitrogenous reductant should be present in exhaust gas flowing into the SCR catalyst. Suitable nitrogenous reductants include ammonia. Ammonia can be generated by heating ammonium carbamate (a solid) and the ammonia generated can be injected into the exhaust gas. Alternatively, ammonia can be generated *in situ* e.g. during rich regeneration of a NAC disposed upstream of the filter or by contacting a TWC with engine-derived rich exhaust gas (see the alternatives to reactions (4) and (5) hereinabove).

Alternatively, or additionally to *in situ* ammonia generation, the nitrogenous reductant or a precursor thereof can be injected directly into the exhaust gas. Suitable precursors include ammonium formate and urea. Decomposition of the precursor to ammonia and other byproducts can be by hydrothermal or catalytic hydrolysis. Accordingly, in embodiments, the exhaust system according to the second aspect of the invention can comprise an injector means for injecting a nitrogenous reductant into flowing exhaust gas upstream of the catalysed filter. Such injector is fluidly linked to a source of such nitrogenous reductant precursor, e.g. a tank thereof, and valve-controlled dosing of the precursor into the exhaust stream is regulated by suitably programmed engine management means and closed loop or open loop feedback provided by sensors monitoring relevant exhaust gas composition.

In a further preferred embodiment, the filter is catalysed with a $NO_x$ absorber catalyst washcoat and a honeycomb substrate monolith comprising a SCR catalyst (preferably any of the preferred SCR catalysts disclosed hereinabove) is disposed downstream of the filter. Intermittent rich running of the engine, e.g. to regenerate the $NO_x$ absorption capacity of the $NO_x$ absorber catalyst, can generate ammonia *in situ* on the TWC or $NO_x$ absorber for use in reducing $NO_x$ on a downstream SCR catalyst.

Therefore, the exhaust system of the positive ignition engine according to the second aspect of the invention can comprise a series of monolith substrates disposed in a flow direction from upstream to downstream according to one of the following arrangements:

(i) TWC on a flow through monolith substrate followed by a filter substrate comprising a TWC according to the first aspect of the present invention;

(ii) TWC on a flow through monolith substrate followed by a filter substrate comprising a SCR catalyst according to the first aspect of the invention, wherein the engine is configured intermittently to run rich, thereby to generate ammonia *in situ* on the TWC component;

(iii) $NO_x$ absorber catalyst on a flow through monolith substrate followed by a filter substrate comprising a SCR catalyst according to the first aspect of the invention, wherein the engine is configured intermittently to run rich, thereby to generate ammonia *in situ* on the $NO_x$ absorber catalyst component;

(iv) $NO_x$ absorber catalyst on a filter substrate according to the first aspect of the invention followed by a flow through honeycomb substrate comprising a SCR catalyst, wherein the engine is configured intermittently to run rich, thereby to generate ammonia *in situ* on the $NO_x$ absorber catalyst component;

(v) as (ii) except in that the TWC is on a filter substrate according to the invention and a flow through substrate monolith comprises the SCR catalyst;

(vi) as (iii) except in that a TWC on a flow through monolith substrate is disposed upstream of the $NO_x$ absorber

catalyst on a flow through monolith substrate, wherein ammonia may be generated on both the TWC component and the $NO_x$ absorber catalyst component;

(vii) as (iv) except in that a TWC on a flow through monolith substrate is disposed upstream of the $NO_x$ absorber catalyst on the filter according to the first aspect of the invention, wherein ammonia may be generated *in situ* on both the TWC component and the $NO_x$ absorber catalyst component; and

(viii) as any of (ii)-(vii) inclusive, wherein instead of or in addition to an *in situ* ammonia generation system, an injector means for injecting a nitrogenous reductant or a precursor thereof is disposed upstream of the SCR catalyst but downstream of the TWC or $NO_x$ absorber catalyst.

In a preferred embodiment according to the invention, the catalyst washcoat composition is a selective catalytic reduction (SCR) catalyst washcoat composition and the system comprises engine management means for controlling at least one engine cylinder thereby to emit enriched exhaust gas from the engine for generating ammonia *in situ* on the flow through monolith substrate comprising a three-way catalyst composition or a $NO_x$ absorber catalyst composition disposed upstream of the catalysed filter.

Positive ignition internal combustion engines, such as spark ignition internal combustion engines, for use in this aspect of the invention can be fuelled by gasoline fuel, gasoline fuel blended with oxygenates including methanol and/or ethanol, liquid petroleum gas or compressed natural gas. Positive ignition engines can be stoichiometrically operated engines or lean-burn operated engines.

According to a second aspect, the invention provides a vehicle comprising a positive ignition engine according to the fourth aspect of the invention.

According to a third aspect, the invention provides method of simultaneously converting oxides of nitrogen and particulate matter in the exhaust gas of a positive ignition internal combustion engine, which method comprising the step of contacting the gas with a catalysed filter comprising a porous substrate having a total substrate length and having inlet surfaces and outlet surfaces, wherein the inlet surfaces are separated from the outlet surfaces by a first porous structure containing pores of a first mean pore size, wherein the porous substrate is coated in part with a catalyst washcoat composition, wherein a second porous structure of a washcoated part of the porous substrate contains pores of a second mean pore size, wherein the second mean pore size is less than the first mean pore size, which catalyst washcoat composition being disposed in a first zone comprising the inlet surfaces of a first substrate length less than the total substrate length, wherein a second zone comprising the outlet surfaces of a second substrate length contains no washcoat and wherein the sum of the substrate length in the first zone and the substrate length in the second zone is >100%, wherein the first zone is disposed upstream of the second zone, wherein the second substrate length is 100% of the total substrate length and wherein the substrate zone length in the first zone is 25 to 75% of the total substrate length.

In order that the invention may be more fully understood, reference is made to the accompanying drawings wherein:

Figure 1 is a graph showing the size distributions of PM in the exhaust gas of a diesel engine. For comparison, a gasoline size distribution is shown at Figure 4 of SAE 1999-01-3530;

Figures 2A-C show schematic drawings of three embodiments of washcoated porous filter substrates according to the invention;

Figure 3 is a schematic graph of mercury porosimetry relating the pore size distribution of a porous filter substrate, a porous washcoat layer and a porous filter substrate including a porous surface washcoat layer; and

Figure 4 is a schematic drawing of an embodiment of an exhaust system according to the invention.

Figures 2A-C show a cross-section through a porous filter substrate 10 comprising a surface pore 12. Figure 2 shows a cross-section through a porous filter substrate 10 comprising a surface pore 12. Figure 2 shows an embodiment, featuring a porous surface washcoat layer 14 comprised of solid washcoat particles, the spaces between which particles define pores (interparticle pores). It can be seen that the washcoat layer 14 substantially covers the pore 12 of the porous structure and that a mean pore size of the interparticle pores 16 is less than the mean pore size 12 of the porous filter substrate 10.

Figure 2B shows a second embodiment comprising a washcoat that is coated on an inlet surface 16 and additionally within a porous structure 12 of the porous substrate 10. It can be seen that the washcoat layer 14 causes a narrowing of a pore openings of surface pore 12, such that a mean pore size 18 of the coated porous substrate is less than the mean pore size 12 of the porous filter substrate 10.

Figure 2C shows a third embodiment wherein the washcoat 14 sits substantially within, i.e. permeates, the porous 12 structure of the porous substrate 10.

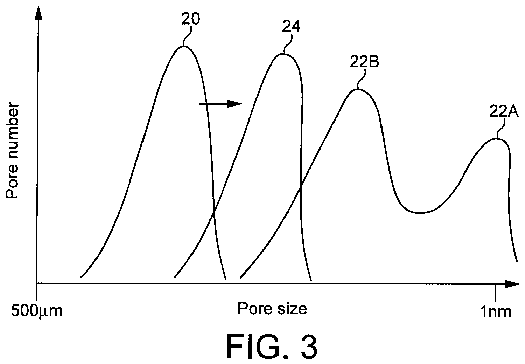

Figure 3 shows an illustration of a graph relating pore size to pore number for a porous filter substrate 20, a porous washcoat layer 22 and a porous diesel filter substrate including a surface washcoat layer 24. It can be seen that the filter substrate has a mean pore size of the order of about $15\mu$m. The washcoat layer has a bimodal distribution comprised of intraparticle pores 22A (at the nanometre end of the range) and interparticle pores 22B towards the micrometer end of the scale. It can also be seen that by coating the porous filter substrate with a washcoat according to the invention that the pore distribution of the bare filter substrate is shifted in the direction of the interparticle washcoat pore size (see arrow).

Figure 4 shows an apparatus 11 according to the invention comprising a vehicular positive ignition engine 13 and an exhaust system 15 therefor. Exhaust system 15 comprises a conduit 17 linking catalytic aftertreatment components, namely a Pd-Rh-based TWC coated onto an inert cordierite flowthrough substrate 18 disposed close to the exhaust manifold of the engine (the so-called close coupled position). Downstream of the close-coupled catalyst 18 in turn is a zoned CuCHA SCR catalyst coated onto a cordierite wall-flow filter 20 having a total length and comprising inlet channels coated to a length of two thirds of the total length measured from an upstream or inlet end of the wall-flow filter with a washcoat loading of 170.9 g/L (2.8 gin$^{-3}$), which coating defining a first zone 22. The outlet channels are free of any coating. Engine management means (not shown) is run intermittently rich, i.e. in "rich spike"-type mode, thereby to contact the upstream TWC with enriched exhaust gas and to generate ammonia and other reformed nitrogenous reductant species *in situ* and to promote $NO_x$ conversion on the downstream SCR catalyst.

The following Example is provided by way of illustration only. The washcoat loadings quoted in the Example was obtained using the method disclosed in WO 2011/080525.

## Example

Two cordierite wall-flow filters of dimensions 11.8 x 13.97 cm (4.66 x 5.5 inches), 46.5 cells per cm$^2$ (300 cells per square inch), wall thickness 0.305 mm (12 thousandths of an inch) and having a mean pore size of 20 $\mu$m and a porosity of 65% were each coated with a TWC composition in a different configuration from the other. A first, reference filter, was zone coated homogeneously to a length of 50% of total filter length from the inlet end and to a length of 50% of total filter length from the outlet end with the same three-way catalyst washcoat at 1.41 g/L (40g/ft$^3$) total platinum group metals and to a total of 97.6 g/L (1.6 g/in$^3$) washcoat loading. A second filter, according to the invention, was zone coated with an identical three-way catalyst washcoat to that which was used in the reference Example to a length of 50% of total length of the filter from the inlet end. The outlet end zone was left bare of any washcoat. A total platinum group metal loading in the first, inlet zone was 2.83 g/L (80g/ft$^3$) at a washcoat loading of 146.5 g/L (2.4 g/in$^3$), i.e. the platinum group metal loading was identical between the reference Example and the filter according to the present invention.

The coated filters were each hydrothermally oven aged in 10% water/air for 5 hours at 950°C. Cold flow back pressure of each part was measured at room temperature using a SuperFlow® backpressure laboratory test apparatus drawing air at room temperature and pressure. The results are set out in the following Table, from which it can be seen that the results that for the range of flow rates tested, the back pressure generated by the reference Example is significantly higher than for the filter according to the invention for the same precious metal loading.

**Table 1** - Presenting cold flow back pressure (KPa (mBar)) vs. Flow (m$^3$/h) data comparing filter according to the Invention with Reference Example

| Flow (m$^3$/h) | Backpressure (KPa (mBar)) | | % KPa (mBar) Difference between Example & Reference |
| --- | --- | --- | --- |
| | Inlet Zone Coated Filter | Reference Filter | |
| 200 | 1.17 (11.7) | 1.53 (15.3) | -23.5 |
| 300 | 2.07 (20.7) | 2.52 (25.2) | -17.9 |
| 400 | 3.17 (31.7) | 3.65 (36.5) | -13.2 |
| 500 | 4.48 (44.8) | 4.93 (49.3) | -9.1 |

(continued)

| Flow (m³/h) | Backpressure (KPa (mBar)) | | % KPa (mBar) Difference between Example & Reference |
|---|---|---|---|
| | Inlet Zone Coated Filter | Reference Filter | |
| 600 | 6.00 (60.0) | 6.36 (63.6) | -5.7 |

**Claims**

1. A positive ignition engine comprising an exhaust system comprising a catalysed filter for filtering particulate matter from exhaust gas emitted from a positive ignition internal combustion engine, which filter comprising a ceramic porous wall-flow filter substrate having a total substrate length and having inlet channels defined in part by ceramic inlet wall surfaces and outlet channels defined in part by ceramic outlet wall surfaces, wherein the inlet surfaces are separated from the outlet surfaces by a first porous structure containing pores of a first mean pore size, wherein the porous substrate is coated in part with a catalyst washcoat composition, wherein a second porous structure of a washcoated part of the porous substrate contains pores of a second mean pore size, wherein the second mean pore size is less than the first mean pore size, which catalyst washcoat composition being disposed in a first zone comprising the inlet surfaces of a first substrate length less than the total substrate length, wherein a second zone comprising the outlet surfaces of a second substrate length contains no washcoat and wherein the sum of the substrate length in the first zone and the substrate length in the second zone is >100%, wherein the substrate zone length in the first zone is 25 to 75% of the total substrate length, wherein the first zone is disposed upstream from the second zone, and wherein the second substrate length is 100% of the total substrate length.

2. A positive ignition engine according to claim 1, wherein the catalyst washcoat composition is selected from the group consisting of a three-way catalyst washcoat composition, an oxidation catalyst washcoat composition, a absorber catalyst washcoat composition and a selective catalytic reduction (SCR) catalyst washcoat composition.

3. A positive ignition engine according to claim 1, wherein the catalyst washcoat composition is a three-way catalyst washcoat composition.

4. A positive ignition engine according to claim 2 or 3, wherein the three-way catalyst washcoat composition comprises at least one platinum group metal supported on a high surface area oxide, and an oxygen storage component.

5. A positive ignition engine according to claim 4, wherein the at least one platinum group metal is selected from the group consisting of (i) platinum and rhodium; (ii) palladium and rhodium; (iii) platinum, palladium and rhodium; (iv) palladium only; and (v) rhodium only.

6. A positive ignition engine according to claim 2, wherein the absorber catalyst washcoat composition comprises: a mixture of rhodium supported on a zirconia-based mixed oxide, a ceria-zirconia mixed oxide or an optionally stabilised alumina; and platinum and/or palladium supported on an alumina-based high surface area support and ceria or a mixed oxide comprising ceria and an alkaline earth metal, an alkali metal or a lanthanide is supported on the ceria or mixed oxide comprising ceria.

7. A positive ignition engine according to claim 2, wherein the SCR catalyst washcoat composition comprises Cu, Fe and/or Ce supported on or exchanged into a synthetic aluminosilicate zeolite molecular sieve selected from the group consisting of AEI, MFI (ZSM-5), ERI, mordenite, ferrierite, BEA, Y, CHA and LEV.

8. A positive ignition engine according to any preceding claim, wherein the washcoat loading in the first zone is >1.60 gin$^{-3}$ (> 97.6 g/l).

9. A positive ignition engine according to claim 2 and any of claims 3 to 8 when dependent on claim 2, wherein the catalyst washcoat composition is a three-way catalyst washcoat composition, an oxidation catalyst washcoat composition or a $NO_x$ absorber catalyst washcoat composition, wherein a total platinum group metal loading in the first zone is >50 gft$^{-3}$ (>1.77 g/l).

10. A positive ignition engine according to any preceding claim, comprising a surface catalyst washcoat composition comprising solid washcoat particles, wherein a catalyst washcoat composition layer substantially covers surface pores of the porous structure and the pores of the second mean pore size of the washcoated porous substrate are defined in part by spaces between the particles (interparticle pores) in the catalyst washcoat composition.

11. A positive ignition engine according to any preceding claim, wherein the exhaust system comprises a flow through monolith substrate comprising a three-way catalyst composition or a absorber catalyst composition disposed upstream of the catalysed filter.

12. A positive ignition engine according to claim 11 when dependent on claim 2, wherein the catalyst washcoat composition is a selective catalytic reduction (SCR) catalyst washcoat composition, which system comprising an injector means for injecting a nitrogenous reductant into flowing exhaust gas upstream of the catalysed filter.

13. A positive ignition engine comprising an exhaust system according to claim 12, wherein the catalyst washcoat composition is a selective catalytic reduction (SCR) catalyst washcoat composition, which system comprising engine management means for controlling at least one engine cylinder thereby to emit enriched exhaust gas for generating ammonia *in situ* on the flow through monolith substrate comprising a three-way catalyst composition or a $NO_x$ absorber catalyst composition disposed upstream of the catalysed filter.

14. A vehicle comprising a positive ignition engine according to any preceding claim.

15. A method of simultaneously converting oxides of nitrogen and particulate matter in the exhaust gas of a positive ignition internal combustion engine, which method comprising the step of contacting the gas with a catalysed filter comprising a porous substrate having a total substrate length and having inlet surfaces and outlet surfaces, wherein the inlet surfaces are separated from the outlet surfaces by a first porous structure containing pores of a first mean pore size, wherein the porous substrate is coated in part with a catalyst washcoat composition, wherein a second porous structure of a washcoated part of the porous substrate contains pores of a second mean pore size, wherein the second mean pore size is less than the first mean pore size, which catalyst washcoat composition being disposed in a first zone comprising the inlet surfaces of a first substrate length less than the total substrate length, wherein a second zone comprising the outlet surfaces of a second substrate length contains no washcoat and wherein the sum of the substrate length in the first zone and the substrate length in the second zone is >100%, wherein the first zone is disposed upstream of the second zone, wherein the second substrate length is 100% of the total substrate length and wherein the substrate zone length in the first zone is 25 to 75% of the total substrate length.

**Patentansprüche**

1. Fremdzündungsmotor, der eine Abgasanlage umfasst, die einen katalysierten Filter zum Filtern von Schwebstoffen aus Abgas umfasst, das von einem Verbrennungsmotor mit Fremdzündung emittiert wird, wobei dieser Filter ein keramisches poröses Wall-Flow-Filtersubstrat umfasst, das eine Gesamtsubstratlänge aufweist und Einlasskanäle, die zum Teil von keramischen Einlasswandflächen definiert werden, und Auslasskanäle, die zum Teil von keramischen Auslasswandflächen definiert werden, aufweist, wobei die Einlassflächen von den Auslassflächen durch eine erste poröse Struktur getrennt sind, die Poren mit einer ersten mittleren Porengröße enthält, wobei das poröse Substrat zum Teil mit einer Katalysator-Washcoat-Zusammensetzung beschichtet ist, wobei eine zweite poröse Struktur eines mit Washcoat beschichteten Teils des porösen Substrats Poren mit einer zweiten mittleren Porengröße enthält, wobei die zweite mittlere Porengröße kleiner als die erste mittlere Porengröße ist, wobei diese Katalysator-Washcoat-Zusammensetzung in einer ersten Zone, die die Einlassflächen umfasst, mit einer ersten Substratlänge, die kleiner als die Gesamtsubstratlänge ist, angeordnet ist, wobei eine zweite Zone, die die Auslassflächen umfasst, mit einer zweiten Substratlänge keinen Washcoat enthält und wobei die Summe der Substratlänge in der ersten Zone und der Substratlänge in der zweiten Zone > 100 % ist, wobei die Substratzonenlänge in der ersten Zone 25 bis 75 % der Gesamtsubstratlänge ausmacht, wobei die erste Zone stromaufwärts von der zweiten Zone angeordnet ist, und wobei die zweite Substratlänge 100 % der Gesamtsubstratlänge ausmacht.

2. Fremdzündungsmotor nach Anspruch 1, wobei die Katalysator-Washcoat-Zusammensetzung aus der Gruppe bestehend aus einer Drei-Wege-Katalysator-Washcoat-Zusammensetzung, einer Oxidationskatalysator-Washcoat-Zusammensetzung, einer $NO_x$-Absorberkatalysator-Washcoat-Zusammensetzung und einer Selektive-katalytische-Reduktionskatalysator-Washcoat-Zusammensetzung (SCR-Katalysator-Washcoat-Zusammensetzung) ausgewählt ist.

3. Fremdzündungsmotor nach Anspruch 1, wobei die Katalysator-Washcoat-Zusammensetzung eine Drei-Wege-Katalysator-Washcoat-Zusammensetzung ist.

4. Fremdzündungsmotor nach Anspruch 2 oder 3, wobei die Drei-Wege-Katalysator-Washcoat-Zusammensetzung mindestens ein Platingruppenmetall, das auf einem Oxid mit großer Oberfläche geträgert ist, und eine Sauerstoffspeicherkomponente umfasst.

5. Fremdzündungsmotor nach Anspruch 4, wobei das mindestens eine Platingruppenmetall aus der Gruppe bestehend aus (i) Platin und Rhodium; (ii) Palladium und Rhodium; (iii) Platin, Palladium und Rhodium; (iv) nur Palladium und (v) nur Rhodium ausgewählt ist.

6. Fremdzündungsmotor nach Anspruch 2, wobei die $NO_x$-Absorberkatalysator-Washcoat-Zusammensetzung umfasst: ein Gemisch von Rhodium, das auf einem zirconiumdioxidbasierten Mischoxid, einem Cerdioxid-Zirconiumdioxid-Mischoxid oder einem optional stabilisierten Aluminiumoxid geträgert ist; und Platin und/oder Palladium, das auf einem aluminiumoxidbasierten Träger mit großer Oberfläche und Cerdioxid oder einem Mischoxid, das Cerdioxid umfasst, geträgert ist, und wobei ein Erdalkalimetall, ein Alkalimetall oder ein Lanthanid auf dem Cerdioxid oder dem Mischoxid, das Cerdioxid umfasst, geträgert ist.

7. Fremdzündungsmotor nach Anspruch 2, wobei die SCR-Katalysator-Washcoat-Zusammensetzung Cu, Fe und/oder Ce, das auf einem synthetischen Alumosilicat-Zeolith-Molekularsieb, das aus der Gruppe bestehend aus AEI, MFI (ZSM-5), ERI, Mordenit, Ferrierit, BEA, Y, CHA und LEV ausgewählt ist, geträgert und in dieses ausgetauscht ist.

8. Fremdzündungsmotor nach einem vorhergehenden Anspruch, wobei die Washcoat-Beladung in der ersten Zone > 1,60 g/in$^{-3}$ (> 97,6 g/l) beträgt.

9. Fremdzündungsmotor nach Anspruch 2 und einem der Ansprüche 3 bis 8 bei Abhängigkeit von Anspruch 2, wobei die Katalysator-Washcoat-Zusammensetzung eine Drei-Wege-Katalysator-Washcoat-Zusammensetzung, eine Oxidationskatalysator-Washcoat-Zusammensetzung oder eine $NO_x$-Absorberkatalysator-Washcoat-Zusammensetzung ist, wobei eine Gesamtplatingruppenmetallbeladung in der ersten Zone > 50 g/ft$^{-3}$ (> 1,77 g/l) beträgt.

10. Fremdzündungsmotor nach einem vorhergehenden Anspruch, der eine Oberflächenkatalysator-Washcoat-Zusammensetzung umfasst, die feste Washcoat-Partikel umfasst, wobei eine Katalysator-Washcoat-Zusammensetzungsschicht im Wesentlichen Oberflächenporen der porösen Struktur abdeckt und die Poren mit der zweiten mittleren Porengröße des mit Washcoat beschichteten porösen Substrats zum Teil von Räumen zwischen den Partikeln (Zwischenpartikelporen) in der Katalysator-Washcoat-Zusammensetzung definiert wird.

11. Fremdzündungsmotor nach einem vorhergehenden Anspruch, wobei die Abgasanlage ein Durchfluss-Monolith-Substrat umfasst, das eine Drei-Wege-Katalysator-Zusammensetzung oder eine $NO_x$-Absorberkatalysator-Zusammensetzung umfasst, die stromaufwärts von dem katalysierten Filter angeordnet ist.

12. Fremdzündungsmotor nach Anspruch 11 bei Abhängigkeit von Anspruch 2, wobei die Katalysator-Washcoat-Zusammensetzung eine Selektivekatalytische-Reduktionskatalysator-Washcoat-Zusammensetzung (SCR-Katalysator-Washcoat-Zusammensetzung) ist, wobei diese Anlage ein Einspritzermittel zum Einspritzen eines stickstoffhaltigen Reduktionsmittels in strömendes Abgas stromaufwärts von dem katalysierten Filter umfasst.

13. Fremdzündungsmotor, der eine Abgasanlage umfasst, nach Anspruch 12, wobei die Katalysator-Washcoat-Zusammensetzung eine Selektivekatalytische-Reduktionskatalysator-Washcoat-Zusammensetzung (SCR-Katalysator-Washcoat-Zusammensetzung) ist, wobei diese Anlage ein Motormanagementmittel zum Steuern von mindestens einem Motorzylinder umfasst, wodurch angereichertes Abgas zum Erzeugen von Ammoniak *in situ* auf dem Durchfluss-Monolith-Substrat, das eine Drei-Wege-KatalysatorZusammensetzung oder eine $NO_x$-Absorberkatalysator-Zusammensetzung umfasst, die stromaufwärts von dem katalysierten Filter angeordnet ist, emittiert wird.

14. Fahrzeug, das einen Fremdzündungsmotor nach einem vorhergehenden Anspruch umfasst.

15. Verfahren zur gleichzeitigen Umwandlung von Stickstoffoxiden und Schwebstoffen im Abgas eines Verbrennungsmotors mit Fremdzündung, wobei dieses Verfahren den Schritt eines Inkontaktbringens des Gases mit einem katalysierten Filter umfasst, der ein poröses Substrat umfasst, das eine Gesamtsubstratlänge aufweist und Einlassflächen und Auslassflächen aufweist, wobei die Einlassflächen von den Auslassflächen durch eine erste poröse Struktur getrennt sind, die Poren mit einer ersten mittleren Porengröße enthält, wobei das poröse Substrat zum Teil mit einer Katalysator-Washcoat-Zusammensetzung beschichtet ist, wobei eine zweite poröse Struktur eines mit Washcoat beschichteten Teils des porösen Substrats Poren mit einer zweiten mittleren Porengröße enthält, wobei die zweite mittlere Porengröße kleiner als die erste mittlere Porengröße ist, wobei diese Katalysator-Washcoat-Zusammensetzung in einer ersten Zone, die die Einlassflächen umfasst, mit einer ersten Substratlänge, die kleiner als die Gesamtsubstratlänge ist, angeordnet ist, wobei eine zweite Zone, die die Auslassflächen umfasst, mit einer zweiten Substratlänge keinen Washcoat enthält und wobei die Summe der Substratlänge in der ersten Zone und der Substratlänge in der zweiten Zone > 100 % ist, wobei die erste Zone stromaufwärts von der zweiten Zone angeordnet ist, wobei die zweite Substratlänge 100 % der Gesamtsubstratlänge ausmacht und wobei die Substratzonenlänge in der ersten Zone 25 bis 75 % der Gesamtsubstratlänge ausmacht.

## Revendications

1. Moteur à allumage commandé comprenant un système d'échappement comprenant un filtre catalysé pour filtrer la matière particulaire provenant du gaz d'échappement émis d'un moteur à combustion interne à allumage commandé, lequel filtre comprenant un substrat de filtre en céramique poreux de type wall-flow ayant une longueur totale de substrat et ayant des canaux d'entrée délimités en partie par des surfaces de parois d'entrée en céramique et des canaux de sortie délimités en partie par des surfaces de parois de sortie en céramique, dans lequel les surfaces d'entrée sont séparées des surfaces de sortie par une première structure poreuse contenant des pores d'une première taille de pore moyenne, le substrat poreux étant revêtu en partie d'une composition de washcoat de catalyseur, dans lequel une seconde structure poreuse d'une partie revêtue de washcoat du substrat poreux contient des pores d'une seconde taille de pore moyenne, la seconde taille de pore moyenne étant inférieure à la première taille de pore moyenne, laquelle composition de washcoat de catalyseur étant disposée dans une première zone comprenant les surfaces d'entrée d'une première longueur de substrat inférieure à la longueur totale du substrat, dans lequel une seconde zone comprenant les surfaces de sortie d'une seconde longueur de substrat ne contient pas de washcoat et dans lequel la somme de la longueur de substrat dans la première zone et de la longueur de substrat dans la seconde zone est > 100 %, la longueur de zone de substrat dans la première zone représentant de 25 à 75 % de la longueur totale du substrat, la première zone étant disposée en amont de la seconde zone, et la seconde longueur de substrat représentant 100 % de la longueur totale du substrat.

2. Moteur à allumage commandé selon la revendication 1, dans lequel la composition de washcoat de catalyseur est choisie dans le groupe constitué par une composition de washcoat de catalyseur trois voies, une composition de washcoat de catalyseur d'oxydation, une composition de washcoat de catalyseur absorbant les NOx et une composition de washcoat de catalyseur à réduction catalytique sélective (SCR, « *Selective catalytic reduction* »).

3. Moteur à allumage commandé selon la revendication 1, dans lequel la composition de washcoat de catalyseur est une composition de washcoat de catalyseur trois voies.

4. Moteur à allumage commandé selon la revendication 2 ou 3, dans lequel la composition de washcoat de catalyseur trois voies comprend au moins un métal du groupe du platine supporté sur un oxyde à haute surface spécifique, et un composant de stockage d'oxygène.

5. Moteur à allumage commandé selon la revendication 4, dans lequel l'au moins un métal du groupe du platine est choisi dans le groupe constitué par (i) le platine et le rhodium ; (ii) le palladium et le rhodium ; (iii) le platine, le palladium et le rhodium ; (iv) le palladium seulement ; et (v) le rhodium seulement.

6. Moteur à allumage commandé selon la revendication 2, dans lequel la composition de washcoat de catalyseur absorbant les NOx comprend : un mélange de rhodium supporté sur un oxyde mixte à base d'oxyde de zirconium, un oxyde mixte oxyde de cérium-oxyde de zirconium ou une alumine éventuellement stabilisée ; et de platine et/ou de palladium supportés sur un support à haute surface spécifique à base d'alumine et de l'oxyde de cérium ou un oxyde mixte comprenant de l'oxyde de cérium et un métal alcalino-terreux, un métal alcalin ou un lanthanide est supporté sur l'oxyde de cérium ou l'oxyde mixte comprenant de l'oxyde de cérium.

7. Moteur à allumage commandé selon la revendication 2, dans lequel la composition de washcoat de catalyseur SCR comprend Cu, Fe et/ou Ce supportés sur ou échangés dans un tamis moléculaire zéolithe à base d'aluminosilicate synthétique choisi dans le groupe constitué par AEI, MFI (ZSM-5), ERI, mordénite, ferriérite, BEA, Y, CHA et LEV.

8. Moteur à allumage commandé selon l'une quelconque des revendications précédentes, dans lequel le chargement en washcoat dans la première zone est > 1,60 g in$^{-3}$ (> 97,6 g/l).

9. Moteur à allumage commandé selon la revendication 2 et l'une quelconque des revendications 3 à 8 lorsqu'elles dépendent de la revendication 2, dans lequel la composition de washcoat de catalyseur est une composition de washcoat de catalyseur trois voies, une composition de washcoat de catalyseur d'oxydation ou une composition de washcoat de catalyseur absorbant les NOx, dans lequel un chargement total en métaux du groupe du platine dans la première zone est > 50 g ft$^{-3}$ (> 1,77 g/l).

10. Moteur à allumage commandé selon l'une quelconque des revendications précédentes, comprenant une composition de washcoat de catalyseur de surface comprenant des particules de washcoat solides, dans lequel une couche de la composition de washcoat de catalyseur recouvre dans une large mesure les pores de surface de la structure poreuse et les pores de la seconde taille de pore moyenne du substrat poreux revêtu de washcoat sont délimités en partie par des espaces entre les particules (pores interparticulaires) dans la composition de washcoat de catalyseur.

11. Moteur à allumage commandé selon l'une quelconque des revendications précédentes, dans lequel le système d'échappement comprend un substrat monolithique à écoulement continu comprenant une composition de catalyseur trois voies ou une composition de catalyseur absorbant les NOx disposée en amont du filtre catalysé.

12. Moteur à allumage commandé selon la revendication 11 lorsqu'elle dépend de la revendication 2, dans lequel la composition de washcoat de catalyseur est une composition de washcoat de catalyseur à réduction catalytique sélective (SCR, « *Selective catalytic reduction* »), lequel système comprenant un moyen pour injecter un réducteur azoté dans le gaz d'échappement qui s'écoule en amont du filtre catalysé.

13. Moteur à allumage commandé comprenant un système d'échappement selon la revendication 12, dans lequel la composition de washcoat de catalyseur est une composition de washcoat de catalyseur à réduction catalytique sélective (SCR, « *Selective catalytic reduction* »), lequel système comprenant des moyens de gestion du moteur pour commander au moins un cylindre du moteur pour émettre ainsi du gaz d'échappement enrichi pour générer de l'ammoniac *in situ* sur le substrat monolithique à écoulement continu comprenant une composition de catalyseur trois voies ou une composition de catalyseur absorbant les NOx disposée en amont du filtre catalysé.

14. Véhicule comprenant un moteur à allumage commandé selon l'une quelconque des revendications précédentes.

15. Procédé de conversion simultanée d'oxydes d'azote et de matière particulaire dans le gaz d'échappement d'un moteur à combustion interne à allumage commandé, lequel procédé comprenant l'étape de mise en contact du gaz avec un filtre catalysé comprenant un substrat poreux ayant une longueur totale de substrat et ayant des surfaces d'entrée et surfaces de sortie, les surfaces d'entrée étant séparées des surfaces de sortie par une première structure poreuse contenant des pores d'une première taille de pore moyenne, dans lequel le substrat poreux est revêtu en partie d'une composition de washcoat de catalyseur, dans lequel une seconde structure poreuse d'une partie revêtue de washcoat du substrat poreux contient des pores d'une seconde taille de pore moyenne, la seconde taille de pore moyenne étant inférieure à la première taille de pore moyenne, laquelle composition de washcoat de catalyseur étant disposée dans une première zone comprenant les surfaces d'entrée d'une première longueur de substrat inférieure à la longueur totale du substrat, dans lequel une seconde zone comprenant les surfaces de sortie d'une seconde longueur de substrat ne contient pas de washcoat et dans lequel la somme de la longueur de substrat dans la première zone et de la longueur de substrat dans la seconde zone est > 100 %, la première zone étant disposée en amont de la seconde zone, la seconde longueur de substrat représentant 100 % de la longueur totale du substrat et la longueur de zone de substrat dans la première zone représentant de 25 à 75 % de la longueur totale du substrat.

FIG. 1

FIG. 2A

FIG. 2B

FIG. 2C

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130149223 A1
- GB 2497598 A
- EP 2322773 A1
- EP 2044999 A1
- US 20090193796 A
- US 5473887 A
- WO 2008132452 A
- WO 2010097634 A
- WO 9947260 A
- WO 2011080525 A
- EP 1663458 A